# EUROPÄISCHE PATENTSCHRIFT

(11) **EP 0 772 640 B1**
(45) Veröffentlichungstag und Bekanntmachung des Hinweises auf die Patenterteilung: **28.01.1998**
(21) Anmeldenummer: 95942624.8
(22) Anmeldetag: 13.07.1995
(51) Int. Cl.: C08G 14/06, C08L 61/34

(54) **VERFAHREN ZUR HERSTELLUNG VON WÄSSRIGEN AMINOPLASTHARZEN**
PROCESS FOR PREPARING AQUEOUS AMINOPLASTIC RESINS
PROCEDE DE PRODUCTION D'AMINOPLASTES AQUEUX

(30) Priorität: 22.07.1994 DE 4426002
(43) Veröffentlichungstag der Anmeldung: 14.05.1997
(73) Patentinhaber: BASF AKTIENGESELLSCHAFT, 67056 Ludwigshafen (DE)
(72) Erfinder: MEIER, Anton, D-67134 Birkenheide (DE); HITTINGER, Christel, D-68199 Mannheim (DE); SCHATZ, Hermann, D-67435 Neustadt (DE); REINER, Tilman, D-67227 Frankenthal (DE); LEHNERT, Heinz, D-67227 Frankenthal (DE); NIESSNER, Manfred, D-67105 Schifferstadt (DE)
(86) Internationale Anmeldenummer: EP9502743
(87) Internationale Veröffentlichungsnummer: WO9603450

(56) Entgegenhaltungen:
- EP-A- 0 332 917

## Beschreibung

Die vorliegende Erfindung betrifft ein Verfahren zur Herstellung von wäßrigen Aminoplastharzen, die als Bindemittel für die Herstellung von Holzwerkstoffen geeignet sind.

Weiterhin betrifft die Erfindung wäßrige Aminoplastharze, die nach diesem Verfahren erhältlich sind, ihre Verwendung als Bindemittel für die Herstellung von Holzwerkstoffen, sowie Holzwerkstoffe, die unter Verwendung dieser Aminoplastharze erhältlich sind.

Bindemittel auf Basis von wäßrigen Harnstoff-Formaldehyd-Harzen, die für die Verleimung von zerkleinertem Holz wie Holzspänen zu den entsprechenden Holzwerkstoffen wie Holzspanplatten geeignet sind, sind allgemein bekannt. Üblicherweise wird bei der Herstellung der Holzwerkstoffe eine Leimharzflotte, bestehend aus dem Bindemittel und einem Härter, auf die Holzteile aufgetragen, wonach man sie bei erhöhten Temperaturen zusammengepreßt, wobei das Bindemittel ausgehärtet wird. Allerdings sind die mechanischen Eigenschaften von diesen Holzwerkstoffen, wenn sie längerer Zeit Feuchtigkeit oder Wasser ausgesetzt sind, für viele Anwendungszwecke nicht ausreichend.

Dieser Nachteil läßt sich beheben, wenn man in den Formaldehyd-Harnstoff-Harzen einen Teil des Harnstoffs durch Melamin und Phenol ersetzt.

Aus der DE-A 34 42 454 sind Mischungen von Melamin ("M")-Harn-stoff ("U")-Phenol ("P")-Formaldehyd ("F")-Harzen (MUPF-Harzen) und Harnstoff bekannt. Die MUPF-Harze werden hergestellt, indem man eine Mischung aus Formaldehyd, Melamin und Phenol, in welche der Formaldehyd teilweise oder vollständig in Form einer konzentrierten wäßrigen Lösung mit Harnstoff gebracht wurde, unter schwach basischen Bedingungen kondensiert. Diesen Harzen kann bis zu ca. 50 % des Harnstoffs, bezogen auf die Gesamtmenge an Harnstoff, nach der Kondensation zugesetzt werden.

In der EP-A 273 794 ist ein Verfahren zur Herstellung von MUPF-Harzen beschrieben, nach welchem man eine Mischung aus einem Phenol-Formaldehyd-Präkondensat, das Formaldehyd und Phenol im Verhältnis 1,5 bis 3,5 enthält, einem weiteren Präkondensat, das Formaldehyd und Harnstoff im Verhältnis 1,8 : 1 bis 3 : 1 enthält sowie Melamin kondensiert und das Kondensationsprodukt anschließend mit Harnstoff abmischt. Nach dieser Lehre beträgt der Harnstoff-Anteil, der den MUPF-Harzen vor der Kondensation zugesetzt wird, bezogen auf die gesamte Harnstoffmenge, 70 %.

Die DE-A 31 25 874 betrifft ein Verfahren zur Herstellung von wäßrigen MUPF-Harzen, welches dadurch gekennzeichnet ist, daß man zunächst ein Präkondensat aus Phenol, Formaldehyd und gegebenenfalls einem Alkalihydrogensulfit sowie ein weiteres Präkondensat aus Formaldehyd und Harnstoff im Molverhältnis von bis zu 2,5 : 1 oder weniger herstellt und diese beiden Präkondensate zusammen mit Formaldehyd und Melamin weiterkondensiert. Das MUPF-Harz kann gegebenenfalls mit Harnstoff abgemischt werden.

Die ältere deutsche Anmeldung P 44 01 562.3 betrifft Bindemittel auf Basis von Melamin-Phenol-Formaldehyd-Kondensationsharzen, in die man gegebenenfalls Harnstoff mit einkondensiert. Diese Harze werden nach der Kondensation mit Harnstoff abgemischt. Maximal 25 % der in der Mischung enthaltenen Gesamtmenge an Harnstoff wird während der Kondensation eingesetzt, während der Rest nachträglich zugegeben wird.

Die bekannten MUPF-Harze weisen zwar gegenüber den Formaldehyd-Harnstoff-Harzen ein verbessertes Eigenschaftsniveau auf, was die mechanischen Eigenschaften und die Wasserfestigkeit der daraus hergestellten Holzwerkstoffe betrifft, jedoch lassen sie hinsichtlich dieser und anderer Eigenschaften noch zu wünschen übrig. Beispielsweise sind die Harz-Verarbeiter an Harzen mit einer höheren Reaktivität und höherem Feststoffgehalt interessiert, die bei der Verarbeitung zu Holzwerkstoffen schneller aushärten. Dies würde kürzere Arbeitszyklen und somit eine wirtschaftlichere Herstellung der Holzwerkstoffe ermöglichen. Hinzu kommt, daß Melamin und Phenol im Verhältnis zu den anderen Einsatzstoffen teuer sind. Es werden deshalb Bindemittel gewünscht, die einen geringeren Anteil dieser Komponenten enthalten, ohne daß die aus ihnen hergestellten Holzwerkstoffe in ihrem Eigenschaftsniveau verschlechtert wären.

Aufgabe der vorliegenden Erfindung war es deshalb, verbesserte, für die Herstellung von Holzwerkstoffen geeignete Bindemittel auf Basis von Melamin, Harnstoff, Phenol und Formaldehyd zu finden, welche die oben genannten Mängel nicht aufweisen und insbesondere bei der Verarbeitung zu Holzwerkstoffen rasch aushärten.

Demgemäß wurde ein Verfahren zur Herstellung von wäßrigen Aminoplastharzen, die als Bindemittel für die Herstellung von Holzwerkstoffen geeignet sind, gefunden, welches dadurch gekennzeichnet ist, daß man
a) 1 mol Melamin,
b) eine konzentrierte wäßrige Lösung aus 0,5 bis 5 mol Harnstoff und 3 bis 6 mol Formaldehyd pro Mol Harnstoff, in der Harnstoff und Formaldehyd auch in Form ihrer Reaktionsprodukte vorliegen können,
c) 0,01 bis 0,5 mol Phenol oder einem polykondensationsfähigen Phenolderivat,
d) 0 bis 9 mol Formaldehyd und
e) 0 bis 1 mol einer weiteren polykondensationsfähigen Verbindung
   bei 50 bis 100 °C und bei einem pH-Wert von 7,5 bis 10,0 solange miteinander reagieren läßt, bis die Lösung eine Viskosität von 10 bis 1500 mPa·s erreicht hat, wonach man diese Lösung abkühlen läßt und
f) mit 0,55 bis 0,75 mol Harnstoff pro Mol der als Komponenten (b) und (f) eingesetzten Gesamtmenge an Harnstoff versetzt.

Bei dem erfindungsgemäßen Verfahren wird das Melamin (Komponente a) bevorzugt in fester Form eingesetzt.

Die konzentrierten wäßrigen Lösungen aus Harnstoff und Formaldehyd (Komponente b) sind aus der DE-B 24 51 990 und der EP-A 0 083 427 bekannt. Diese Lösungen aus 3,0 bis 6,0, bevorzugt 3,5 bis 4,5 mol Formaldehyd pro Mol Harnstoff haben bevorzugt einen Feststoffgehalt nach DIN 12 605 von 50 bis 85, bevorzugt von 60 bis 80 Gew.-%. Sie enthalten Harnstoff und Formaldehyd teils in freier Form, in Form von Methylolharnstoffen und in Form von niedermolekularen Kondensationsprodukten.

Diese Lösungen werden vorzugsweise so eingestellt, daß sie einen Gesamtformaldehydgehalt von 30 bis 60 Gew.-%, bevorzugt von 40 bis 55 Gew.-% und einen Gesamtharnstoffgehalt von 15 bis 40, bevorzugt 20 bis 30 Gew.-% Harnstoff aufweisen. Sie enthalten günstigerweise neben freiem Formaldehyd und Mono- oder Polymethylolharnstoffverbindungen, die nur eine von Harnstoff abgeleitete Einheit enthalten, bevorzugt weniger als 10 Gew.-% Harnstoff-Formaldehyd-Kondensationsprodukte, die mehr als eine von Harnstoff abgeleitete Einheit enthalten.

Als Komponente (c) kommen neben Phenol insbesondere solche polykondensationsfähigen Phenolderivate in Betracht, durch deren Mitverwendung das Eigenschaftsbild der Kondensationsharze im Vergleich zu solchen, die nur aus Phenol aufgebaut sind, nicht wesentlich verändert wird. Geeignete Phenolderivate sind beispielsweise Homologe des Phenols, z. B. (C₁- bis C₆)-Alkylphenole wie die preisgünstigen Kresole, die Xylenole, Naphthole, 2,2-Bis(4-hydroxyphenyl)-propan (® Bisphenol A), 1,1-Bis-(4-hydroxyphenyl)-ethan oder 1,1-Bis(4-hydroxy-phenyl)-isobutan, Hydrochinon sowie Resorcin.

An Stelle oder neben dem Phenol bzw. seinen Derivaten kann auch ein Umsetzungsprodukt aus Phenol und/oder einem Phenolderivat und Formaldehyd eingesetzt werden. Diese Umsetzungsprodukte sind ebenfalls allgemein bekannt (vgl. Ullmann's Ecyclopedia of Industrial Chemistry, 5. Auflage, Band A 19, S. 371-384). Es kommen vor allem wäßrige Lösungen von Resolen in Betracht, die einen Feststoffgehalt von 30 bis 80 und bevorzugt von 50 bis 70 Gew.-% und eine Viskosität nach DIN 53 018 von 10 bis 5000, bevorzugt 50 bis 500 mPa·s aufweisen.

Die Resole enthalten üblicherweise Phenol und/oder ein Phenolderivat und Formaldehyd im Verhältnis 0,1 : 1 bis 3 : 1 und bevorzugt 0,3 : 1 bis 1 : 1.

Besonders günstig wird das Phenol bzw. das Phenolderivat in Form eines Umsetzungsproduktes mit Formaldehyd z.B. eines Resols eingesetzt, in welchem 0,35 bis 0,02 mol pro Mol des Phenols eines Alkalimetallhydrogensulfits und/oder Alkalimetallsulfits eingebaut sind. Derartige Harze und ihre Herstellung sind beispielsweise in der DE-A 31 25 874 beschrieben.

Formaldehyd (Komponente d) wird bevorzugt in Form einer 30 bis 40 gew.-%igen wäßrigen Lösung eingesetzt.

Als sonstige polykondensationsfähige Verbindungen (Komponente e) kommen Harnstoffderivate, z.B. Ethylenharnstoff, Ethylendiharnstoff, Dipropylentrisharnstoff und Dipropylentrisharnstoff sowie Guanamine, z.B. Benzoguanamin, Amide, z.B. E-Caprolactam, Alkohole, z.B. Ethylenglycol in Betracht.

Man läßt die Komponenten (a) bis (e) bei 60 bis 100, bevorzugt bei 75 bis 95°C und einem pH-Wert von 7,5 bis 10, bevorzugt von 8,2 bis 9,0 so lange reagieren, bis die Lösung eine Viskosität von 10 bis 1500, bevorzugt von 10 bis 500 mPa·s erreicht hat, wonach man die Lösung abkühlen läßt, bis sie eine Temperatur von 10 bis 80°C bevorzugt von 40 bis 75°C erreicht hat.

Im übrigen nimmt man die Kondensation in an sich bekannter Weise vor. Näheres ist z.B. Ullmanns Encyklopädie der technischen Chemie, 4. Auflage, Band 7, S. 403 bis 415 und der DE-A 34 42 454 zu entnehmen.

Unmittelbar nach dem Abkühlen auf 20 bis 80 °C oder zu einem späteren Zeitpunkt wird das Umsetzungsprodukt der Komponenten (a) bis (e) mit Harnstoff vermischt.

Der Harnstoff (Komponente f) wird bevorzugt in fester Form oder in Form einer 40 bis 80, bevorzugt 60 bis 70 gew.-%igen wäßrigen Lösung zugegeben.

Die Art und Weise der Vermischung ist unkritisch und wird praktischerweise so vorgenommen, daß man den Harnstoff in das Umsetzungsprodukt einrührt.

Bei dem erfindungsgemäßen Verfahren werden die Komponenten (a) bis (e) vorzugsweise in solchen Mengen eingesetzt, daß auf
a) 1 mol Melamin
b) eine konzentrierte wäßrige Lösung aus 0,5 bis 2,0, besonders bevorzugt 0,7 bis 1,5 mol Harnstoff und 3 bis 5 mol, besonders bevorzugt 3,5 bis 4,5 Formaldehyd pro Mol Harnstoff, in der Harnstoff und Formaldehyd auch in Form ihrer Reaktionsprodukte vorliegen können,
c) 0,05 bis 0,2 mol Phenol oder einem polykondensationsfähigen Phenolderivat,
d) 0 bis 4 mol Formaldehyd und
e) 0 bis 0,2 mol einer weiteren polykondensationsfähigen Verbindung
kommen.

Die Menge der Komponente (f) beträgt vorzugsweise 0,55 bis 0,75 mol pro Mol der als Komponenten (b) und (f) eingesetzten Gesamtmenge an Harnstoff.

Bevorzugt werden pro Mol (-NH₂)-Gruppen der im Harnstoff der Komponente (b) und im Melamin (Komponente a) ursprünglich vorhandenen (-NH₂)-Gruppen 0,9 bis 1,3, bevorzugt 1,2 bis 1,0 mol Formaldehyd eingesetzt. Dabei wird allerdings nur der Formaldehyd berücksichtigt, der in freier Form oder in Form eines Harnstoff-Formaldehyd-Adduktes oder Kondensates eingesetzt wird. Der in einem Umsetzungssprodukt aus Phenol bzw. einem Phenolderivat gebundene Formaldehyd wird hierbei nicht berücksichtigt.

Die nach dem erfindungsgemäßen Verfahren erhältlichen Aminoplastharze werden vorzugsweise auf einen pH-Wert von 8 bis 10, bevorzugt von 8,5 bis 9,5, eingestellt und sind bei einer Lagertemperatur von 20°C über ca. 3 bis 6 Monate Wochen hinweg lagerbar, ohne daß sich ihre physikalischen und anwendungstechnischen Eigenschaften merklich verändern.

Zur Einstellung des pH-Wertes können die allgemein üblichen Basen wie Alkali- oder Erdalkalihydroxide, bevorzugt in Form ihrer wäßrigen Lösungen, tertiäre Amine, z.B. Tri-(C₁- bis C₆-Alkyl)-amine wie Tributylamin und Triethylamin sowie tertiäre C₁- bis C₆-Alkanolamine, z.B. Triethanolamin, Methyldiethanolamin verwendet werden.

Die Aminoplastharze weisen im allgemeinen einen Feststoffgehalt von 50 bis 75, bevorzugt von 55 bis 65 Gew.-% und eine Viskosität von 10 bis 1000, bevorzugt 10 bis 500 mPa·s auf.

Aminoplastharze, die die genannten hohen Feststoffgehalte aufweisen, lassen sich nach dem beschriebenen Herstellverfahren leicht erhalten, wenn Einsatzstoffe mit entsprechend hohen Feststoffgehalten gewählt werden. Deshalb erübrigt es sich meistens, den Feststoffgehalt durch Einengen zu erhöhen.

Die Aminoplastharze können gegebenenfalls mit weiteren gebräuchlichen Hilfs- und Zusatzstoffen abgemischt werden.

Zu ihrer Stabilisierung und zur Verbesserung der mechanischen Eigenschaften der mit den Aminoplastharzen hergestellten Holzwerkstoffe können den Aminoplastharzen Polyalkohole, Zucker und wasserlösliche Polymere, aufgebaut aus Monomeren wie Acrylamid, Ethylenoxid, N-Vinylpyrrolidon, Vinylacetat oder copolymerisierbaren Mischungen dieser Monomeren zugesetzt werden.

Die Reaktivität der Aminoplastharze beim Aushärten kann dadurch erhöht werden, daß ihnen zusätzlich ein Härter in Mengen von 0,1 bis 2 Gew.-%, bezogen auf den Feststoffgehalt des Bindemittels, zugefügt wird. Geeignete Härter sind Ammoniumsalze wie Ammoniumchlorid, Ammoniumsulfat, Ammoniumnitrat, Ammoniumphosphate, starke Carbonsäuren wie Ameisensäure und Oxalsäure, Mineralsäuren wie Schwefelsäure sowie p-Toluolsulfonsäure.

Weiterhin können den Aminoplastharzen Schädlingsbekämpfungsmittel, z.B. handelsübliche Insektizide oder Fungizide beigemischt werden.

Die Aminoplastharze eignen sich besonders als Bindemittel zur Herstellung von Holzwerkstoffen wie Sperrholz, aus Schichtholz aufgebauten Holzbalken oder Tischlerplatten und vor allem von Holzfaserplatten und Holzspanplatten (vgl. Ullmanns Encyklopädie der Technischen Chemie, 4. Auflage, 1976, Band 12, S. 709 bis 727) aus zerkleinertem Holz.

Die Herstellung der Holzwerkstoffe erfolgt nach den auf diesem Fachgebiet allgemein bekannten Methoden. Die Verleimung erfolgt günstigerweise, indem man das mit dem Aminoplastharz versehene zerkleinerte Holz bei Temperaturen von 120 bis 250°C verpreßt. Unter diesen Bedingungen härtet das Aminoplastharz rasch aus und man erhält Holzwerkstoffe mit guten mechanischen Eigenschaften, die weitgehend unempfindlich gegenüber Feuchtigkeitseinflüssen sind.

Die mit den erfindungsgemäßen Aminoplastharzen hergestellten Spanplatten weisen gute mechanische Eigenschaften, z.B. einer hohe Querzugsfestigkeit und sind widerstandsfähig gegenüber Feuchtigkeit.

Die erfindungsgemäßen Aminoplastharze zeichnen sich insbesondere durch eine hohe Reaktivität aus. Bei ihrer Verarbeitung zu Holzwerkstoffen härten sie schneller aus als übliche Bindemittel. Diese Eigenschaft ermöglicht es, die zur Herstellung des Aminoplastharz-Holz-Verbundes erforderliche Preßzeit zu verkürzen, ohne das die Endfestigkeit des Verbundes hierdurch beeinflußt würde. Hierdurch wird eine wirtschaftlichere Holzwerkstoffherstellung ermöglicht.

Die in den Beispielen zu den Viskositäten gemachten Angaben beziehen sich auf Messungen nach DIN 53 018. Die Viskosität wird hiernach an einer auf einen Feststoffgehalt von 65 Gew.-% eingestellten wäßrigen Lösung in einem Rotationsviskosimeter bei 20°C und einem Geschwindigkeitsgefälle von 500 s⁻¹ gemessen.

Die genannten Feststoffgehalte beziehen sich auf Messungen nach DIN 12 605, wobei 1 g der Substanz in einem Wägeglas nach DIN 12 605 mit einem Durchmesser von 35 mm bei einer Temperatur von 100°C 2 h getrocknet werden.

### Beispiel 1

Eine Mischung aus 855 g einer 40 %-igen wäßrigen Formaldehyd-Lösung (entspricht 11,4 mol), 531 g (5,6 mol) Phenol und 116 g (0,92 mol) Natrimsulfit wurde auf 60°C erhitzt, wonach sich die Mischung ohne weitere Wärmezufuhr auf ca. 100°C erwärmte. Die Mischung wurde auf 90°C abgekühlt und so lange bei dieser Temperatur belassen, bis das Reaktionsprodukt eine Viskosität von 370 mPa·s aufwies. Danach wurde auf Raumtemperatur abgekühlt.

Eine Mischung aus 62,5 g des Phenol-Formaldehyd-Kondensats (entspricht 0,48 mol Formaldehyd, 0,23 mol Phenol und 0,04 mol Natriumsulfit), 184 g (1,46 mol) Melamin, 127 g einer 40 %-igen wäßrigen Formaldehyd-Lösung (entspricht 1,69 mol) und 418 g einer Lösung aus 50 Gew.-% Formaldehyd (entspricht 6,97 mol), 25 Gew.-% Harnstoff (entspricht 1,74 mol) und 25 Gew.-% Wasser wurde 90 min bei einem pH Wert von 8,6 auf 90°C erhitzt, anschließend auf 50°C abgekühlt und danach mit 283 g (4,71 mol) Harnstoff vermischt. Die Viskosität betrug 360 mPa·s und der Feststoffgehalt 65 Gew.-%.

### Beispiel 2

Eine Mischung aus 34,6 g des Phenol-Formaldehyd-Kondensates (s. Beispiel 1, entspricht 0,27 mol Formaldehyd, 0,13 mol Phenol und 0,02 mol Natriumsulfit), 200 g (1,58 mol) Melamin, 203 g einer 40 %-igen wäßrigen Formaldehyd-Lösung (entspricht 2,71 mol) und 355 g einer Lösung aus 50 Gew.-% Formaldehyd (entspricht 5,92 mol), 25 Gew.-% Harnstoff (entspricht 1,48 mol) und 25 Gew.-% Wasser wurde 90 min bei einem pH Wert von 8,6 auf 90°C erhitzt, anschließend auf 50°C abgekühlt und danach mit 222 g (3,70 mol) Harnstoff vermischt. Die Viskosität betrug 152 mPa·s und der Feststoffgehalt 63 Gew.-%.

### Beispiel 1V (zum Vergleich)

Eine Mischung aus 62,5 g des Phenol-Formaldehyd-Kondensates (s. Beispiel 1, entspricht 0,48 mol Formaldehyd, 0,23 mol Phenol und 0,04 mol Natriumsulfit), 184 g (1,46 mol) Melamin, 423 g einer 40 %-igen wäßrigen Formaldehyd-Lösung (entspricht 5,64 mol) und 275 g eines handelsüblichen wäßrigen Harnstoff-Formaldehyd Harzes, wie es in der DE-A 31 25 874 beschrieben ist, aus 38 Gew.-% Formaldehyd (entspricht 3,02 mol) und 38 Gew.-% Harnstoff (entspricht 1,74 mol) wurde 90 min bei einem pH Wert von 8,6 auf 90°C erhitzt, anschließend auf 50°C abgekühlt und danach mit 283 g (4,71 mol) Harnstoff vermischt. Die Viskosität betrug 250 mPa·s und der Feststoffgehalt 57 Gew.-%.

Die Reaktivität eines Aminoplastharzes ist um so höher, je kürzer seine Gelierzeit ist. Während beim Vergleichsbeispiel eine Gelierzeit von 87 s ermittelt wurde, betrug sie bei den erfindungsgemäßen Beispielen 57 s (Beispiel 1) bzw. 55 s (Beispiel 2).

Zur Bestimmung der Gelierzeit wurden je 100 Teile der Aminoplastharze mit 10 Teilen einer 20 gew.-%igen wäßrigen Ammoniumsulfatlösung vermischt und auf 100°C erhitzt. Die Zeit, die eine Mischung bis zur Gelierung benötigt, ist ein Maß für ihre Reaktivität.

## Patentansprüche

1. Verfahren zur Herstellung von wäßrigen Aminoplastharzen, die als Bindemittel für die Herstellung von Holzwerkstoffen geeignet sind, dadurch gekennzeichnet, daß man
a) 1 mol Melamin,
b) eine konzentrierte wäßrige Lösung aus 0,5 bis 5 mol Harnstoff und 3 bis 6 mol Formaldehyd pro Mol Harnstoff, in der Harnstoff und Formaldehyd auch in Form ihrer Reaktionsprodukte vorliegen können,
c) 0,01 bis 0,5 mol Phenol oder eines polykondensationsfähigen Phenolderivates,
d) 0 bis 9 mol Formaldehyd und
e) 0 bis 1 mol einer weiteren polykondensationsfähigen Verbindung
bei 50 bis 100°C und bei einem pH-Wert von 7,5 bis 10,0 solange miteinander reagieren läßt, bis die Lösung eine Viskosität von 10 bis 1500 mPa·s erreicht hat, wonach man diese Lösung abkühlen läßt und
f) mit 0,55 bis 0,75 mol Harnstoff pro Mol der als Komponenten (b) und (f) eingesetzten Gesamtmenge an Harnstoff versetzt.

2. Verfahren nach Anspruch 1, dadurch gekennzeichnet, daß man das Phenol bzw. das polykondensationsfähige Phenolderivat in Form eines Umsetzungsprodukts mit Formaldehyd einsetzt.

3. Verfahren nach Anspruch 1 oder 2, dadurch gekennzeichnet, daß in das Umsetzungsprodukt aus Phenol und Formaldehyd zusätzlich ein Alkalimetallhydrogensulfit und/oder ein Alkalimetallsulfit einkondensiert wird.

4. Verfahren nach den Ansprüchen 1 bis 3, dadurch gekennzeichnet, daß man pro Mol (-NH₂)-Gruppen der im Harnstoff der Komponente (b) und im Melamin (Komponente a) ursprünglich vorhandenen (-NH₂)-Gruppen 0,9 bis 1,3 mol Formaldehyd einsetzt.

5. Wäßrige Aminoplastharze, erhältlich nach den Verfahren der Ansprüche 1 bis 4.

6. Verwendung der wäßrigen Aminoplastharze gemäß den Ansprüchen 1 bis 5 als Bindemittel für die Herstellung von Holzwerkstoffen.

7. Holzwerkstoffe, erhältlich unter Verwendung der wäßrigen Aminoplastharze gemäß den Ansprüchen 1 bis 5.

## Claims

1. A process for preparing aqueous amino resins useful as binders for producing woodbase materials, characterized in that
a) 1 mol of melamine,
b) a concentrated aqueous solution of 0.5 to 5 mol of urea and 3 to 6 mol of formaldehyde per mole of urea, in which urea and formaldehyde can also be present in the form of their reaction products,
c) 0.01 to 0.5 mol of phenol or of a polycondensation-capable phenol derivative,
d) 0 to 9 mol of formaldehyde and
e) 0 to 1 mol of a further polycondensation-capable compound
are reacted at 50 to 100°C and at a pH value of 7.5 to 10.0 until the solution has reached a viscosity of 10 to 1500 mPa·s, whereafter this solution is allowed to cool down and
f) is admixed with 0.55 to 0.75 mol of urea per mole of the total amount of urea used as components (b) and (f).

2. A process as claimed in claim 1, characterized in that phenol or the polycondensation-capable phenol derivative is used in the form of a reaction product with formaldehyde.

3. A process as claimed in claim 1 or 2, characterized in that an alkali metal hydrogensulfite and/or an alkali metal sulfite is additionally condensed into the reaction product of phenol and formaldehyde.

4. A process as claimed in claims 1 to 3, characterized in that 0.9 to 1.3 mol of formaldehyde are used per mole of -NH₂ groups of the -NH₂ groups originally present in the urea of component (b) and in the melamine (component a).

5. Aqueous amino resins obtainable by the processes of claims 1 to 4.

6. The use of the aqueous amino resins of claims 1 to 5 as binders for producing woodbase materials.

7. Woodbase materials obtainable using the aqueous amino resins of claims 1 to 5.

## Revendications

1. Procédé de préparation de résines aminoplastes aqueuses, qui conviennent en tant que liant pour la fabrication de matériaux à base de bois, caractérisé en ce que l'on laisse réagir ensemble
a) 1 mole de mélamine,
b) une solution aqueuse concentrée de 0,5-5 moles d'urée et de 3-6 moles de formaldéhyde par mole d'urée, dans laquelle l'urée et le formaldéhyde peuvent aussi se trouver sous la forme de leurs produits de réaction,
c) 0,01-0,5 mole de phénol ou d'un dérivé polycondensable du phénol,
d) 0-9 moles de formaldéhyde et
e) 0-1 mole d'un autre composé polycondensable à 50-100°C et à un pH de 7,5-10,0, jusqu'à ce que la solution ait atteint une viscosité de 10-1500 mPa.s, après quoi on laisse refroidir la solution et
f) on mélange avec 0,55-0,75 mole d'urée par mole d'urée totale ajoutée en tant que composants (b) et (f).

2. Procédé selon la revendication 1, caractérisé en ce que l'on ajoute le phénol ou le dérivé polycondensable du phénol sous la forme d'un produit de réaction avec le formaldéhyde.

3. Procédé selon la revendication 1 ou 2, caractérisé en ce qu'on condense en outre un hydrogénosulfite de métal alcalin et/ou un sulfite de métal alcalin, dans le produit de réaction à base de phénol et de formaldéhyde.

4. Procédé selon l'une quelconque des revendications 1 à 3, caractérisé en ce que l'on utilise 0,9-1,3 mole de formaldéhyde par mole de groupements (-NH₂) initialement présents dans l'urée du composant (b) et de groupements (-NH₂) initialement présents dans la mélamine (composant a).

5. Résines aminoplastes aqueuses obtenues par le procédé de l'une quelconque des revendications 1 à 4.

6. Utilisation des résines aminoplastes aqueuses selon l'une quelconque des revendications 1 à 5 en tant que liant pour la fabrication de matériaux à base de bois.

7. Matériaux à base de bois obtenus par l'utilisation de résines aminoplastes aqueuses selon l'une quelconque des revendications 1 à 5.
